# EUROPEAN PATENT SPECIFICATION

(11) **EP 2 190 031 B1**
(45) Date of publication and mention of the grant of the patent: **12.04.2017**
(21) Application number: 09014453.6
(22) Date of filing: 19.11.2009
(51) Int. Cl.: H02S 20/23, E04D 13/147, F24J 2/46, F24J 2/52, H01L 31/042, E04D 13/12

(54) **roof installation**
Dachinstallation
installation du toit

(30) Priority: 19.11.2008 GB 0821148
(43) Date of publication of application: 26.05.2010
(73) Proprietor: Solmatix Limited, BT29 4JF (GB)
(72) Inventor: Bell, Richard, County Antrim BT29 4JF (GB); McCullagh, Paul Francis, County Antrim BT29 4JF (GB)
(74) Representative: Wallace, Alan Hutchinson

(56) References cited:
- WO-A1-2005/015094
- JP-A- 59 069 657
- JP-A- 2008 231 914
- US-B1- 6 453 633

## Description

### Field of the Invention

The present invention relates to devices for mounting objects to roofs, especially tiled or slate roofs. The invention is particularly suited to mounting solar panels to roofs and in particular for passing a heating medium, such as water, through the roof structure.

### Background to the Invention

Japanese patent JP 59069657 discloses a fitting for a solar heat collector having a bendable metallic plate for deforming to the configuration of a roof tile. Japanese patent application JP 2008231914 discloses an installation structure for a solar battery module.

It is increasingly common to mount solar panels to tiled roofs. However, most conventional tiles or slates are not intended to be load bearing.

Moreover, solar panels for use with heating systems require pipes for carrying the heating medium (typically water) between the panel and the heating system. When the solar panel is mounted on a tiled roof, it can be problematic to pass the pipe through conventional tiles, or other roof covering.

In addition, any penetration of a tile or slate creates a potential point of ingress for moisture.

As a result of the problems outlined above, it is common to replace one or more of the conventional tiles or slates with purpose-built tiles that are adapted to carry the solar panels and to receive the necessary pipes. However, this significantly increases the expense of installing the solar panels, not least because of the time required to replace the conventional tiles or slates with the purpose-built tiles.

It would be desirable to provide mounting devices that mitigate the problems outlined above.

### Summary of the Invention

A first aspect of the invention provides roof installation as claimed in claim 1.

Preferred and optional features of the invention are identified in the dependent claims.

In some embodiments, the installation comprises a device for mounting an object, especially a solar panel, to a roof structure, the device comprising: a sleeve member having first and second ends; a fixing member having first and second ends and being shaped and dimensioned to fit through the sleeve member; and first coupling means for coupling said object to said first end of the fixing member, wherein said first end of said sleeve member provides a load bearing surface co-operable with said first coupling means to transmit, during use, the weight of said object through said sleeve member.

In preferred embodiments, said first end of the fixing member projects out of said first end of the sleeve member and includes, or is adapted to receive, a retaining device, for example a fixed head or a nut, the retaining device being co-operable with said load bearing surface to retain one or more objects against said load bearing surface. The first end of the sleeve together with said retaining device form part of said first coupling means.

The first coupling means preferably also includes a support member for supporting the object to be mounted to the roof structure. In the preferred embodiment, the support member is coupled to the lead bearing surface of the sleeve member by said retaining device and transmits, in use, the weight of the mounted object to the sleeve member.

The support member may take the form of a rail, especially in cases where the mounted object is a solar panel.

The first coupling means may also include a device for releasably clamping said object. In embodiments where said first coupling means includes said support member, the clamping device is conveniently provided on said support member. In cases where said support member comprises a rail, said clamping device is advantageously slidable along said rail.

The mounting device typically also includes second coupling means for coupling said second end of the fixing device to the roof structure, especially to a batten, rafter or other part of a roof support structure, or mounting component attached to the roof structure. In preferred embodiments, said second end of the sleeve member provides a load transmitting surface co-operable with said second coupling means to transmit, during use, the weight of said object to said batten, rafter or other part of a roof support structure or mounting component.

In preferred embodiments, said second end of the fixing member projects out of said second end of the sleeve member and includes, or is adapted to receive, a retaining device, for example a fixed head or a nut, the retaining device being co-operable with said load transmitting surface to couple said mounting device to said batten, rafter or other part of a roof support structure or mounting component.

In preferred embodiments, said fixing device comprises a bolt. The bolt may be threaded at one or both of said first and second ends to receive a correspondingly threaded nut, or otherwise adapted to receive a corresponding retaining device. Typically, one end of the bolt has a retaining device in the form of a fixed head.

In some embodiments the installation comprises a device for mounting an object, especially a pipe, through a roof structure, especially a tiled roof structure, the device comprising a sleeve member having first and second ends, a flange projecting from said sleeve between said first and second ends, each of said first and second ends including, or being adapted to receive, a respective retaining device, for example a nut.

Preferably, the retaining device of said second end is co-operable with said flange to provide means for coupling said sleeve member to a support.

The preferred sealing member has a sleeve shaped body and an annular flange projecting from the body, typically from an end of the body. The sealing member is preferably formed from a flexible, resilient material.

Advantageously, the mounting device further includes means for compressing said annular sealing member. The compressing means may be provided by a retaining device, for example a nut.

In alternative embodiments, the sleeve member may be replaced by the pipe itself. The flange may be provided on the external surface of the pipe, or may be omitted. Spaced apart portions of the pipe may include, or be adapted to receive, a respective retaining device, for example a nut.

The weight of an object, in particular a solar panel, mounted on said at least one mounting device may be transmitted to said support structure by said at least one mounting device. Other advantageous aspects of the invention will become apparent to those ordinarily skilled in the art upon review of the following description of specific embodiments of the invention and with reference to the accompanying drawings.

### Brief Description of the Drawings

Embodiments of the invention are now described, by way of example only, with reference to the accompanying drawings in which like numerals are used to denote like parts and in which:
Figure 1 is a side view of a typical roof structure;
Figure 2 is a side view of a mounting device according to a first embodiment of the invention, the device being particularly suited for mounting a pipe of a solar panel to a tiled roof and being shown *in situ*;
Figure 3 is a sectional view of the mounting device of Figure 2;
Figure 4 is a perspective view of an end the mounting device of Figure 2 protruding from the tiled roof;
Figure 5 is a perspective view of the protruding end of the mounting device, including a support rail and clamping device for mounting a pipe through a roof structure and for mounting a solar panel to the roof structure;
Figure 6 is a perspective view of part of a solar panel mounted on the support rail and held in place by the clamping device;
Figure 7 is a perspective view of a mounting device according a further embodiment of the present invention wherein the sleeve of the mounting device comprises a part of a pipe for conveying a heating medium through a roof structure;
Figure 8 is a sectional view through the mounting device of Figure 7;
Figure 9 is a perspective view of an alternative mounting device for mounting a solar panel to a tiled roof;
Figure 10 is a sectional view through the mounting device of Figure 9; and
Figure 11 is a perspective view of an end of a non-tightened mounting device of Figure 9 protruding from the tiled roof.

### Detailed Description of the Drawings

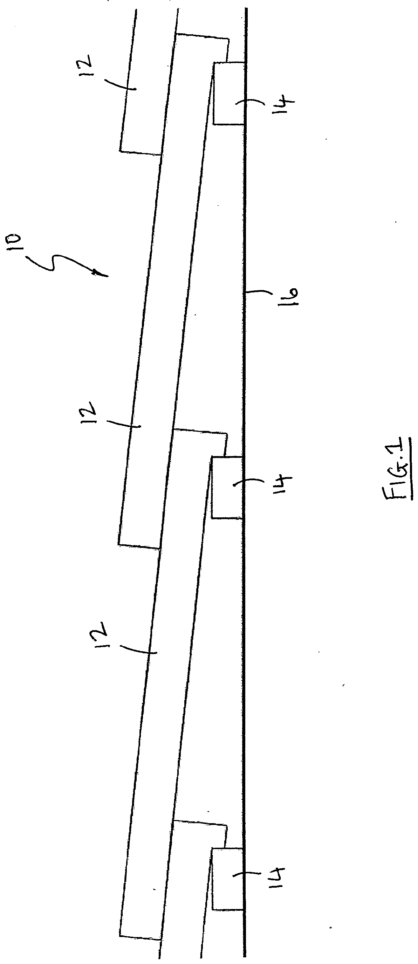

Figure 1 of the drawings shows a typical roof structure 10 comprising a plurality of tiles 12 supported by battens 14 (also commonly known as laths). Adjacent tiles 12 overlap with one another and the battens 14 are located in the overlap region. A layer of felt 16, or other membrane, is usually provided beneath the battens 14. The battens 14, which are seen in end view in Figure 1, run substantially parallel with one another transversely across the roof structure 10. Although not shown in the drawings, the battens 14 are usually supported by a plurality of rafters that run substantially perpendicularly with the battens 14. The battens 14 and rafters form part of a roof support structure commonly referred to as a roof truss. Any attempt to provide a passage for a pipe, for example for the transfer of a heating medium through the tiles or slates will normally result in the creation of a leak in the roof unless a specialised tile is used.

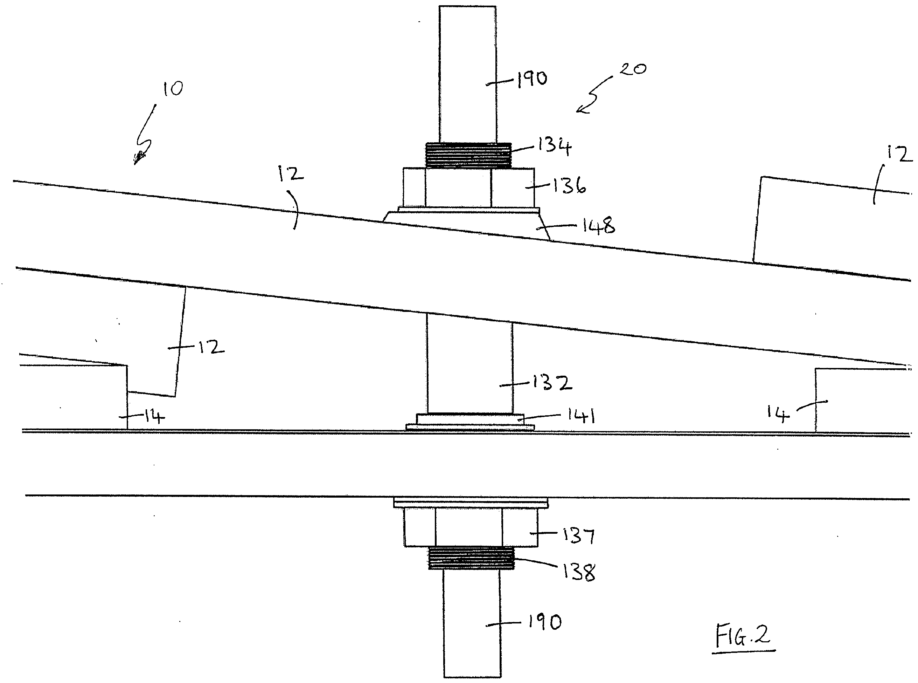

Referring now to Figures 2 to 4, there is shown there is shown, generally indicated as 20, a mounting device embodying one aspect of the invention. The device 20 is particularly suited for mounting pipes, especially pipes for carrying a heating medium to and from a solar panel, through a roof structure, especially a tiled roof structure, and is also suitable for mounting objects, especially solar panels, to a roof structure, especially a tiled roof structure. In the drawings, the mounting device 20 is shown mounted to the roof structure 10 and receiving a pipe 190.

The device 20 comprises a sleeve 132 having first and second ends 134, 138, each being adapted to receive a respective retaining device. In the illustrated embodiment, the retaining devices take the form of a respective threaded nut 136, 137, the respective ends 134, 138 of the sleeve 132 being correspondingly threaded to receive the respective nut 136, 137.

A flange 141 extends at least partially around the external surface of the sleeve 132 intermediate the first and second ends 134, 138. The flange 141 projects laterally from the sleeve 132 and defines a bearing surface 143. The flange 141 may be integrally formed with the sleeve 132, or may be fixed thereto by any suitable means. The sleeve 132 may be formed from any suitable rigid material, e.g. plastics.

A sealing device, in the preferred form of a plug 144, is shaped and dimensioned to fit around the sleeve 132. The plug 144 comprises a collar 148 adapted to fit around the sleeve 132, preferably to provide a seal around the sleeve 132. Preferably, the plug 144 also comprises a sleeve shaped body 146 adapted to fit around the sleeve 132, preferably to provide a seal around the sleeve 132. In the illustrated embodiment, the collar 148 takes the form of an annular flange located at one end of the body 146. The plug 144 is preferably formed from a flexible and resilient material, for example rubber or plastics. A washer 145, in particular a compression washer, is provided for location between the nut 136 and the plug 144.

Preferably, the mounting device 20 is installed between adjacent battens 14. In order to provide support for the device 20 a bracing member 151 may be fixed between the adjacent battens 14. The bracing member may take any convenient form, for example a piece of wood or other material. Optionally, components of the conventional roof support structure, e.g. the rafters, may be used as the bracing member 151. Accordingly, the device 20 may be mounted directly or indirectly on the roof structure.

A support member 50 may be mountable to one or more of the devices 20 to support an object, such as a solar panel, to the roof structure. When mounted on the device 20, the support member 50 may be located over the sleeve 132 to bear against a nut 136 mounted on a threaded portion 134 of the sleeve 132 such that any load carried by the support member 50 is transmitted to the sleeve 132. Conveniently, the support 50 is releasably securable to the sleeve 132 by means of a nut. Alternatively, any other means for securing the support 50 to the device 20 may be provided.

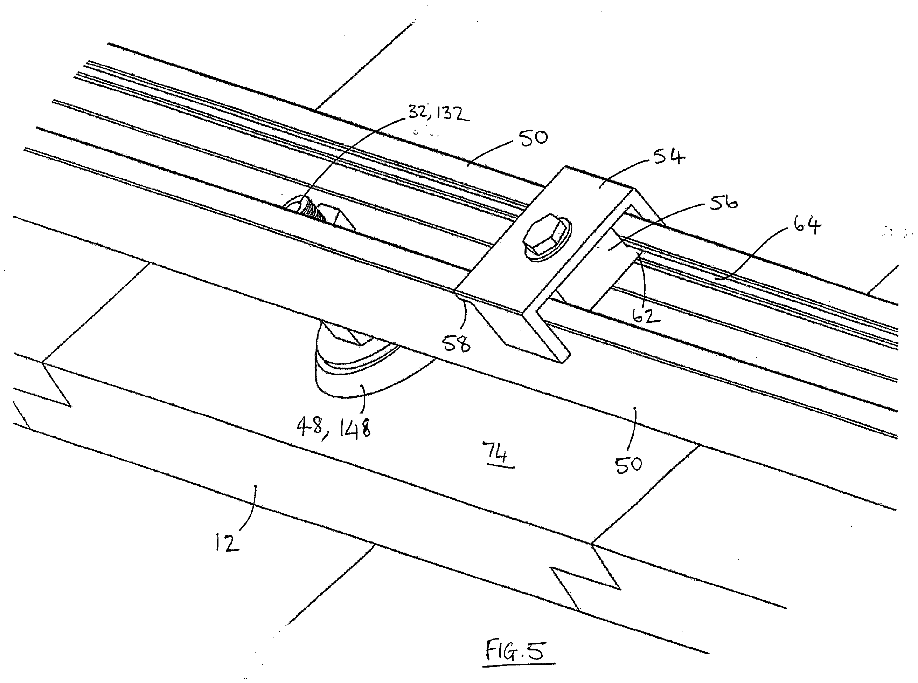

As may best be seen from Figure 5, in the illustrated embodiment, the support 50 takes the form of a rail. In use, a plurality of the devices 20 may be coupled to a common support rail 50, spaced apart along its length. Typically, the support rail 50 runs substantially parallel with the battens 14 and, in the illustrated embodiment, substantially in register with the batten 14 on which its mounting devices 20 are installed. The rail type support 50 is particularly suited to carrying solar panels, as is described in more detail hereinafter. In alternative embodiments (not illustrated), the support may take any other suitable form and need not necessarily be coupled to more than one of the devices 20.

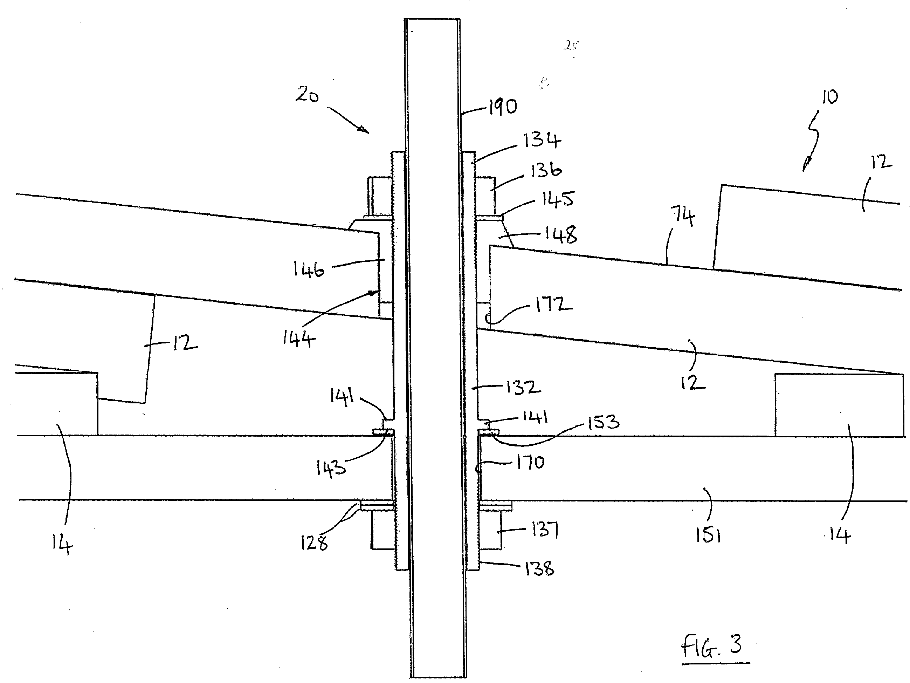

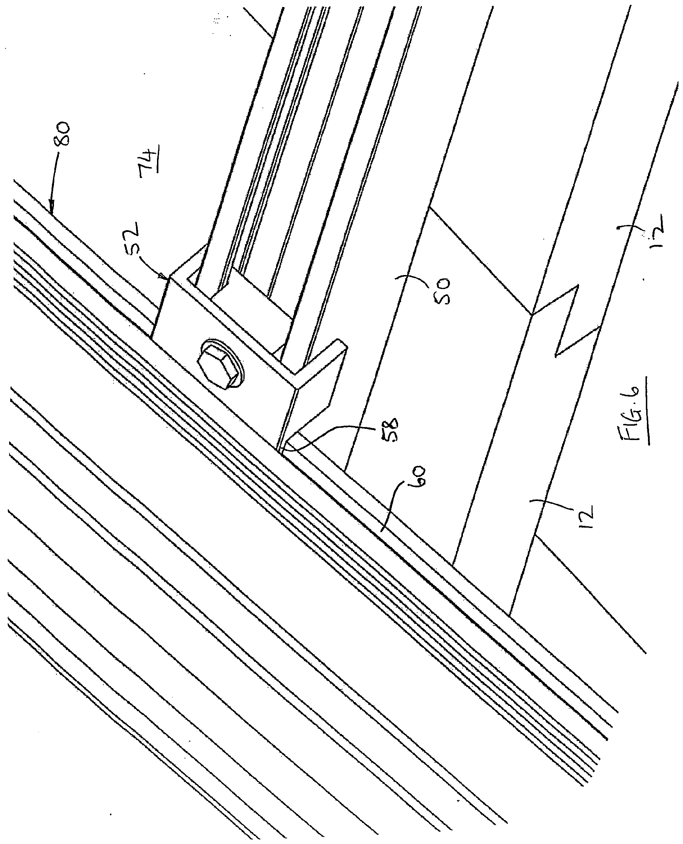

In the preferred embodiment, a clamping device 52 is provided for securing an object, in particular a solar panel (not shown in Figures 2 and 3), to the support 50. The clamping device 52 comprises a first part 54 for engagement with the solar panel, and a second part 56 for engagement with the support 50. The first part 54 includes one of co-operable male and female connectors, the other being provided on the solar panel. In the illustrated embodiment, the first part 54 is provided with a male connector in the form of a flange 58 (Figures 5 and 6), the solar panel being provided with a corresponding female connector in the form of a recess 60 (Figure 6). The second part 56 includes one of co-operable male and female connectors, the other being provided on the support 50. In the illustrated embodiment, the second part 56 is provided with male connectors in the form of flanges 62, the support 50 being provided with corresponding female connectors in the form of recesses 64. In the preferred embodiment where the support 50 takes the form of a rail, the connection between the clamp 52 and the support 50 is such that the clamp 52 is slidable along the rail 50. The first and second parts 54, 56 are preferably coupled together by means of a releasable fixing device such as a screw 66.

In use, the mounting device 20 may be installed as follows. An aperture 170 for receiving the sleeve 132 is formed in the bracing member 151. An aperture 172 is formed through the tile 12, substantially in register with the aperture 170. The aperture 172 is dimensioned to receive the sleeve 132 and plug 144 when assembled. The sleeve 132 is inserted through the apertures 170, 172 such that the first end 136 projects beyond the exterior surface 74 of the tile 12 and the second end 137 projects beyond the underside of the bracing member 151. The aperture 172 is wider than the aperture 170 and this allows the arrangement to be such that the flange 141 can pass through the aperture 172 but not through the aperture 170. The arrangement is such that the bearing surface 143 of the flange 141 bears against (directly or indirectly) the bracing member 151 around the mouth of the aperture 170. This serves to locate the sleeve 132 appropriately with respect to the bracing member 151 and tile 12. Preferably a washer 153 is provided between the flange 141 and the bracing member 151.

The sleeve 132 is secured to the bracing member 151 by means of the nut 137. One or more washers 128, preferably including a sealing washer and a compression washer, are preferably provided between the nut 137 and the bracing member 151.

The plug 144 is fitted around the sleeve 132 such that its body 416 is located in the aperture 172 and its flange 148 engages with the exterior surface 74 of the tile 12 around the mouth of the aperture 72.

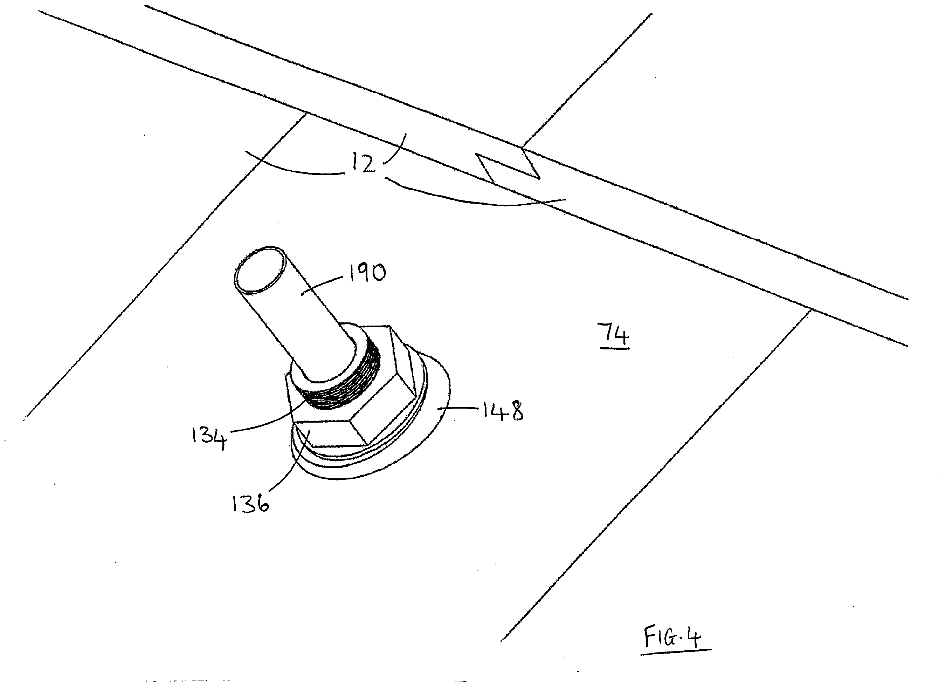

Figure 4 shows the end 134 of the sleeve 32 protruding though the roof structure 10, together with the flange 148, nut 136 and pipe 190.

The sleeve 132 and plug 144 are secured with respect to the tile 12 by tightening the nut 136 against the plug 144 (via the washer 145 in this example). The force exerted on the plug 144 by the nut 136 causes the plug 144, and in particular the flange 148, to be compressed against around the mouth of the aperture 172 and so to form a seal for preventing, or at least inhibiting, ingress of moisture into the aperture 172. The body 146 of the plug 144 not only provides a seal between itself and the internal surface of the aperture 12, but it also improves the fit of the sleeve 132 in the aperture 172.

In alternative embodiments (not illustrated), the plug 144 may be omitted, or provided separately from the flange 148, e.g. it may comprise only the body 146. In either case a sealing washer, or other annular member, may be provided around the mouth of the aperture 172 for providing the function of the flange 148.

The pipe 190 may be connected between the flow or return of a solar panel (not shown in Figures 2 to 4) and the associated heating system (not shown) in conventional manner. Any downward load borne by the device 120 is transmitted to the bracing member 151via the flange 141.

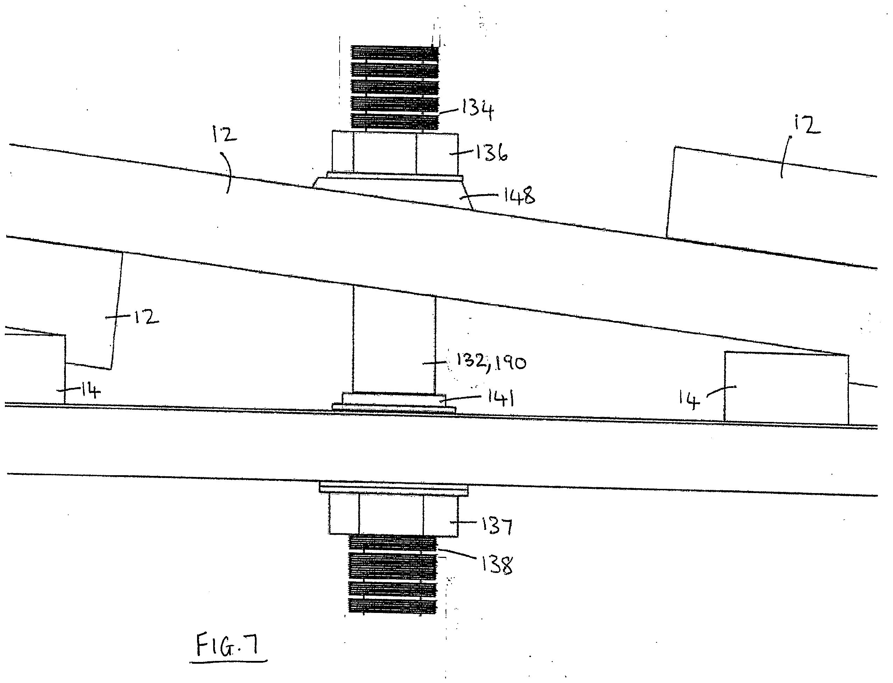

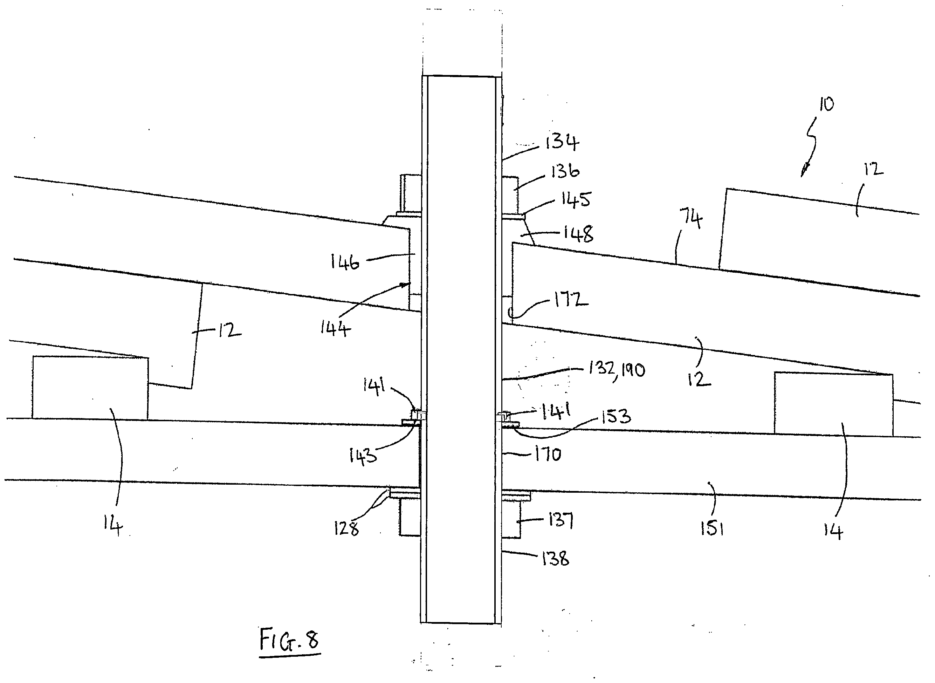

In alternative embodiments as shown in Figures 7 and 8, one or other of the sleeve member 132 or pipe 190 may be omitted and the other of the sleeve 132 or pipe 190 being mountable to the roof structure in a manner similar to that described herein with respect to the sleeve 132, or by other suitable means. The remaining one of the sleeve or pipe serves the functions of the sleeve and pipe as hereinbefore described and so may be regarded as a sleeve and/or a pipe. The flange may be provided on the external surface of the combined sleeve/pipe, or may be mounted thereon, for example by means of an external thread on the sleeve/pipe and a corresponding internal thread on the flange. Spaced apart portions of the sleeve/pipe may include, or be adapted to receive, a respective retaining device, for example a nut. In such embodiments, the sleeve 132 and pipe 190 are essentially combined such that the features of each as hereinbefore described are provided by a single component. Accordingly, the foregoing description of the sleeve 132 and pipe 190 may be applied to the embodiments of Figures 7 and 8, as would be apparent to a skilled person.

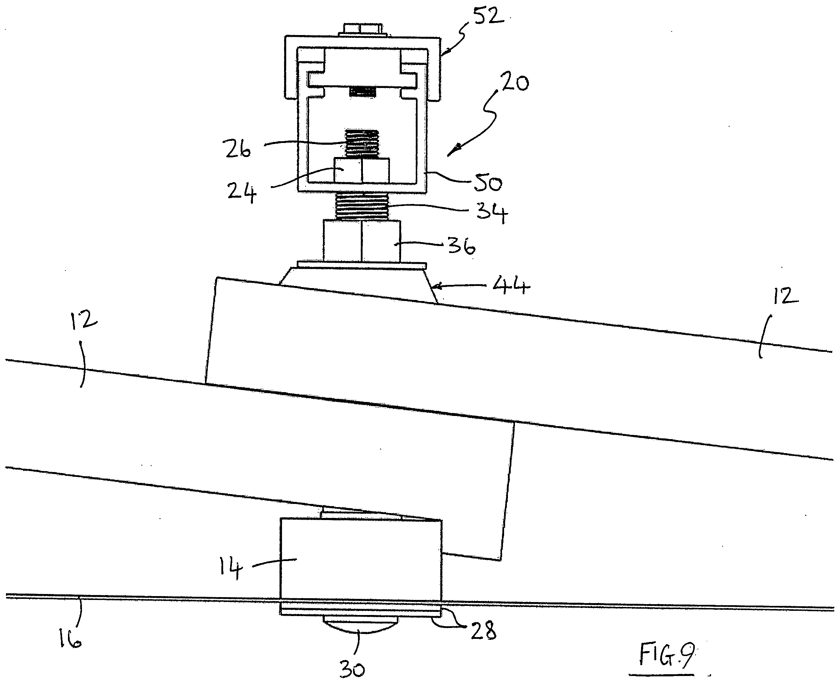

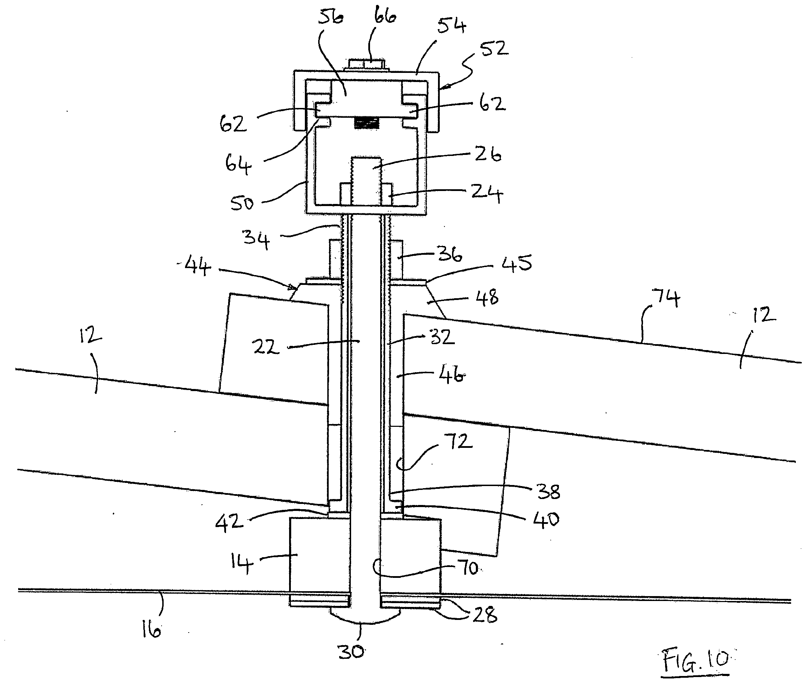

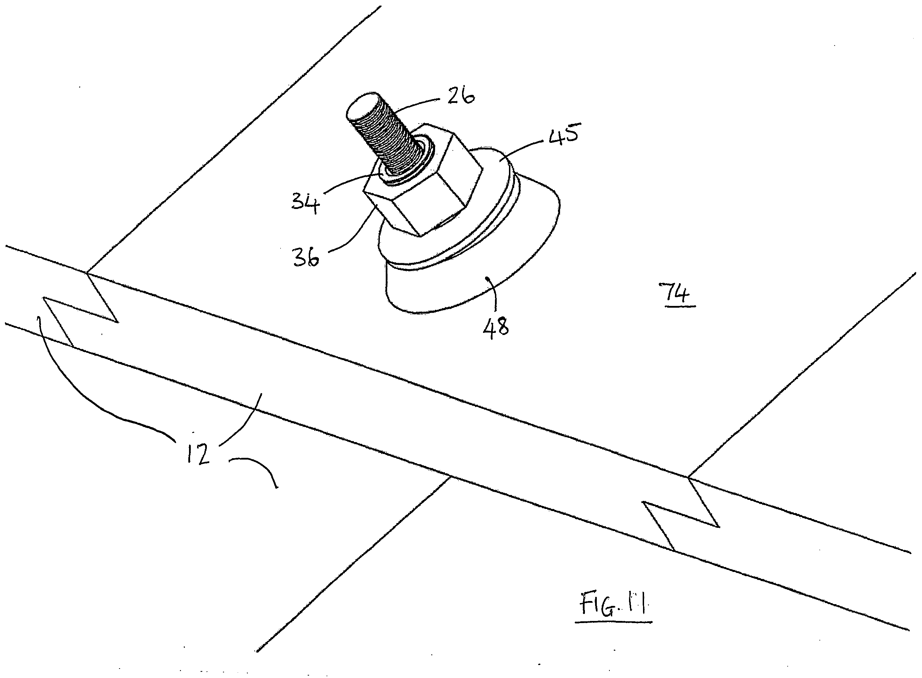

In addition to the mounting devices 20 described above, the solar panels may also or alternatively be mounted on the roof structure via one or more alternative mounting devices 120 as shown in Figures 9 to 11.

The device 120 comprises a bolt 22, or other fixing device, that is preferably co-operable with a nut 24, or other retaining member. In the illustrated embodiment, the free end 26 of the bolt 22 is threaded to receive the nut 24, which is correspondingly threaded. One or more washers 28 are provided for the head 30 of the bolt 22, preferably including a sealing washer and a compression washer. The bolt 22 and nut 24 may be made from any suitable material, typically metal, for example steel.

A sleeve member 32 is shaped and dimensioned to receive the bolt 22. One end 34 of the sleeve 32 is adapted to receive a retaining member. For example, the end 34 may be threaded to receive a correspondingly threaded nut 36. An annular flange 40 is provided at the other end 38 of the sleeve 32. Advantageously, the flange 40 provides a bearing surface by which loads may be transferred (directly or indirectly) to the batten 14 (or other support structure) during use. A sealing washer 42 is provided for location at the end 38 of the sleeve 32. As is described in more detail hereinafter, the sleeve 32 performs a load bearing function and may be made from any material suited to this purpose, for example metal, e.g. steel.

A sealing device, in the preferred form of a plug 44, is shaped and dimensioned to fit around the sleeve 32. The plug 44 comprises a collar 48 adapted to fit around the sleeve 32, preferably to provide a seal around the sleeve 32. Preferably, the plug 44 also comprises a sleeve shaped body 46 adapted to fit around the sleeve 32, preferably to provide a seal around the sleeve 32. In the illustrated embodiment, the collar 48 takes the form of an annular flange located at one end of the body 46. The plug 44 is preferably formed from a flexible and resilient material, for example rubber or plastics. A washer 45, in particular a compression washer, is provided for location between the nut 36 and the plug 44.

A support member 50 is mountable to the device 120. When mounted on the device 120, the support member 50 bears against the sleeve 32 such that any load carried by the support member 50 is transmitted to the sleeve 32. In the illustrated embodiment, the free end 34 of the sleeve 32 provides a bearing surface with which the support 50 can engage. The support 50 includes an aperture (not visible) allowing it to receive the free end 26 of the bolt 22. Conveniently, the support 50 is releasably securable to the sleeve 32 by means of the nut 24 and bolt 22 and, to this end, the relative dimensions of the bolt 22 and sleeve 32 are such that the free end 26 of the bolt 22 projects beyond the end 34 of the sleeve 32. Hence, the arrangement shown in Figure 5 applies not only to the device 20 but also to the device 120.

One or more mounting devices 120 may be incorporated into a mounting system, especially a mounting system for solar panels, together with, or independently of, the mounting device 20.

The invention is not limited to the embodiments described herein which may be modified or varied without departing from the scope of the invention.

## Claims

1. A roof installation comprising a device (20) for mounting an object through a roof structure (10) that includes a support structure (151) supporting a layer of tiles or slates (12), the device comprising a sleeve member (132) having first and second ends (134, 138), and a flange (141) projecting from said sleeve between said first and second ends, a respective aperture (170, 173) being formed in said support structure and in said layer of tiles or slates, the sleeve member being positioned such that its first end extends beyond the exterior surface (74) of the layer of tiles or slates, and its second end projects beyond the underside of the support structure, and wherein a bearing surface (143) of said flange bears directly or indirectly against the support structure around the mouth of the aperture (170) in the support structure, **characterized in that** the sleeve member is inserted through the apertures and **in that** an annular sealing member (144) is located around the sleeve member to provide a sealing fit between the sleeve member and the layer of tiles or slates.

2. A roof installation as claimed in claim 1, wherein said sleeve member (132) is adapted to receive or form a section of a pipe (190) for conveying a fluid, such as a heating medium, through said roof structure (10).

3. A roof installation as claimed in any preceding claim, wherein the first end (134) of the sleeve member is adapted to receive a respective retaining device (136).

4. A roof installation as claimed in any preceding claim wherein at least a portion of said second end (138) of said sleeve member (132) is externally threaded, said mounting device further including a retaining device (137) comprising a correspondingly threaded nut receivable on said threaded portion of the sleeve member.

5. A roof installation as claimed in claim 1, wherein the sealing member (144) has a sleeve shaped body (146) and an annular flange (148) projecting from the body for abutting a surface (74) of the roof structure adjacent said first end (132) of the sleeve member (132).

6. A roof installation as claimed in claim 1 or claim 5, wherein the sealing member (144) is formed from a flexible, resilient material.

7. A roof installation as claimed in any of claims 1, 5 or 6, further comprising means for compressing (136) said annular sealing member (144).

8. A roof installation as claimed in claim 7, wherein at least a portion of said first end (134) of said member (132) is externally threaded, said compressing means (136) comprising a threaded nut receivable on said threaded portion of said first end of the member for compressing said annular sealing member (144) against a surface (74) of the roof structure.

9. A roof installation as claimed in any preceding claim wherein said first end (134) of said member (132) is adapted to enable an object to be mounted on said sleeve member.

10. A roof installation as claimed in any preceding claim, comprising a plurality of said mounting devices (20), and at least one support rail (50) coupled to at least some of said mounting devices.

11. A roof installation as claimed in claim 10, further comprising at least one device (52) for releasably clamping said object to said support rail (50).

12. A roof installation as claimed in claim 11, wherein said at least one clamping device (52) is slidable along said rail (50).

13. A roof installation as claimed in any preceding claim, wherein a pipe (132, 190) passes through or is formed by the sleeve member (132) of said mounting device (20).

14. An installation as claimed in claim 13, wherein said flange (141) abuts against one side of a portion of the support structure (151), a retaining device (137) abutting an opposite side of said portion of the support structure to mount said member (132) thereon.

## Patentansprüche

1. Dachinstallation, umfassend eine Vorrichtung (20) zum Befestigen eines Gegenstands durch eine Dachstruktur (10), die eine eine Schicht aus Ziegeln oder Schiefern (12) tragende Tragstruktur (151) umfasst, hindurch, wobei die Vorrichtung ein Hülsenelement (132) mit einem ersten und einem zweiten Ende (134, 138) und einen zwischen dem ersten und dem zweiten Ende von der Hülse vorstehenden Flansch (141) umfasst, wobei eine jeweilige Öffnung (170, 173) in der Tragstruktur und in der Schicht aus Ziegeln oder Schiefern gebildet ist, wobei das Hülsenelement derart positioniert ist, dass sich sein erstes Ende über die äußere Oberfläche (74) der Schicht aus Ziegeln oder Schiefern hinaus erstreckt und sein zweites Ende über die Unterseite der Tragstruktur hinaus vorsteht, und wobei eine Auflagefläche (143) des Flanschs direkt oder indirekt um die Mündung der Öffnung (170) in der Tragstruktur herum auf der Tragstruktur lastet, **dadurch gekennzeichnet, dass** das Hülsenelement durch die Öffnungen eingesteckt wird und dass ein ringförmiges Dichtungselement (144) um das Hülsenelement herum gelegen ist, um eine dichtende Passung zwischen dem Hülsenelement und der Schicht aus Ziegeln oder Schiefern bereitzustellen.

2. Dachinstallation nach Anspruch 1, wobei das Hülsenelement (132) dazu angepasst ist, einen Teilabschnitt eines Rohrs (190) zum Leiten eines Fluids, wie etwa eines Heizmediums, durch die Dachstruktur (10) aufzunehmen oder zu bilden.

3. Dachinstallation nach einem der vorangehenden Ansprüche, wobei das erste Ende (134) des Hülsenelements dazu angepasst ist, eine jeweilige Haltevorrichtung (136) aufzunehmen.

4. Dachinstallation nach einem der vorangehenden Ansprüche, wobei mindestens ein Abschnitt des zweiten Endes (138) des Hülsenelements (132) mit einem Außengewinde versehen ist, wobei die Befestigungsvorrichtung weiter eine Haltevorrichtung (137) umfasst, die eine auf dem Gewindeabschnitt des Hülsenelements aufnehmbare, entsprechend mit einem Gewinde versehene Mutter umfasst.

5. Dachinstallation nach Anspruch 1, wobei das Dichtungselement (144) einen hülsenförmigen Körper (146) und einen von dem Körper vorstehenden ringförmigen Flansch (148) zum Anliegen an einer Oberfläche (74) der Dachstruktur dem ersten Ende (132) des Hülsenelements (132) benachbart aufweist.

6. Dachinstallation nach Anspruch 1 oder Anspruch 5, wobei das Dichtungselement (144) aus einem biegsamen elastischen Material gebildet ist.

7. Dachinstallation nach einem der Ansprüche 1, 5 oder 6, weiter umfassend Mittel zum Zusammendrücken (136) des ringförmigen Dichtungselements (144).

8. Dachinstallation nach Anspruch 7, wobei mindestens ein Abschnitt des ersten Endes (134) des Elements (132) mit einem Außengewinde versehen ist, wobei das Zusammendrückmittel (136) eine auf dem Gewindeabschnitt des ersten Endes des Elements aufnehmbare Gewindemutter umfasst, um das ringförmige Dichtungselement (144) an einer Oberfläche (74) der Dachstruktur zusammenzudrücken.

9. Dachinstallation nach einem der vorangehenden Ansprüche, wobei das erste Ende (134) des Elements (132) dazu angepasst ist, zu ermöglichen, dass ein Gegenstand an dem Hülsenelement befestigt wird.

10. Dachinstallation nach einem der vorangehenden Ansprüche, umfassend eine Vielzahl der Befestigungsvorrichtungen (20) und mindestens eine Tragschiene (50), die an mindestens einige der Befestigungsvorrichtungen gekoppelt ist.

11. Dachinstallation nach Anspruch 10, weiter umfassend mindestens eine Vorrichtung (52) zum lösbaren Klemmen des Gegenstands an die Tragschiene (50).

12. Dachinstallation nach Anspruch 11, wobei die mindestens eine Klemmvorrichtung (52) entlang der Schiene (50) verschiebbar ist.

13. Dachinstallation nach einem der vorangehenden Ansprüche, wobei ein Rohr (132, 190) durch das Hülsenelement (132) der Befestigungsvorrichtung (20) verläuft oder davon gebildet wird.

14. Installation nach Anspruch 13, wobei der Flansch (141) an einer Seite eines Abschnitts der Tragstruktur (151) anliegt, wobei eine Haltevorrichtung (137) an einer gegenüberliegenden Seite des Abschnitts der Tragstruktur anliegt, um das Element (132) daran zu befestigen.

## Revendications

1. Installation de toit comportant un dispositif (20) servant à monter un objet au travers d'une structure de toit (10) qui comprend une structure de support (151) supportant une couche de tuiles ou d'ardoises (12), le dispositif comportant un élément formant manchon (132) ayant des première et deuxième extrémités (134, 138), et une bride (141) faisant saillie depuis ledit manchon entre lesdites première et deuxième extrémités, une ouverture respective (170, 173) étant formée dans ladite structure de support et dans ladite couche de tuiles ou d'ardoises, l'élément formant manchon étant positionné de telle sorte que sa première extrémité s'étend au-delà de la surface extérieure (74) de la couche de tuiles ou d'ardoises, et sa deuxième extrémité fait saillie au-delà du côté inférieur de la structure de support, et dans laquelle une surface d'appui (143) de ladite bride prend appui directement ou indirectement contre la structure de support autour de l'embouchure de l'ouverture (170) dans la structure de support, **caractérisée en ce que** l'élément formant manchon est inséré au travers des ouvertures et **en ce qu'**un élément d'étanchéité annulaire (144) est situé autour de l'élément formant manchon à des fins de mise en oeuvre d'un ajustement étanche entre l'élément formant manchon et la couche de tuiles ou d'ardoises.

2. Installation de toit selon la revendication 1, dans laquelle ledit élément formant manchon (132) est adapté à des fins de réception ou de formation d'une section d'un tuyau (190) à des fins de transport d'un fluide, tel qu'un milieu chauffant, au travers de ladite structure de toit (10).

3. Installation de toit selon l'une quelconque des revendications précédentes, dans laquelle la première extrémité (134) de l'élément formant manchon est adaptée à des fins de réception d'un dispositif de retenue respectif (136).

4. Installation de toit selon l'une quelconque des revendications précédentes, dans laquelle au moins une partie de ladite deuxième extrémité (138) dudit élément formant manchon (132) est filetée sur l'extérieur, ledit dispositif de montage comprenant par ailleurs un dispositif de retenue (137) comportant un écrou fileté de manière correspondante en mesure d'être reçu sur ladite partie filetée de l'élément formant manchon.

5. Installation de toit selon la revendication 1, dans laquelle l'élément d'étanchéité (144) a un corps en forme de manchon (146) et une bride annulaire (148) faisant saillie depuis le corps à des fins de mise en butée contre une surface (74) de la structure de toit de manière adjacente par rapport à ladite première extrémité (132) de l'élément formant manchon (132).

6. Installation de toit selon la revendication 1 ou la revendication 5, dans laquelle l'élément d'étanchéité (144) est formé à partir d'un matériau flexible, élastique.

7. Installation de toit selon l'une quelconque des revendications 1, 5 ou 6, comportant par ailleurs un moyen servant à comprimer (136) ledit élément d'étanchéité annulaire (144).

8. Installation de toit selon la revendication 7, dans laquelle au moins une partie de ladite première extrémité (134) dudit élément (132) est filetée sur l'extérieur, ledit moyen de compression (136) comportant un écrou fileté en mesure d'être reçu sur ladite partie filetée de ladite première extrémité de l'élément à des fins de compression dudit élément d'étanchéité annulaire (144) contre une surface (74) de la structure de toit.

9. Installation de toit selon l'une quelconque des revendications précédentes, dans laquelle ladite première extrémité (134) dudit élément (132) est adaptée pour permettre à un objet d'être monté sur ledit élément formant manchon.

10. Installation de toit selon l'une quelconque des revendications précédentes, comportant une pluralité desdits dispositifs de montage (20), et au moins un rail de support (50) accouplé à au moins certains desdits dispositifs de montage.

11. Installation de toit selon la revendication 10, comportant par ailleurs au moins un dispositif (52) servant à serrer de manière libérable ledit objet sur ledit rail de support (50).

12. Installation de toit selon la revendication 11, dans laquelle ledit au moins un dispositif de serrage (52) est en mesure de coulisser le long dudit rail (50).

13. Installation de toit selon l'une quelconque des revendications précédentes, dans laquelle un tuyau (132, 190) passe au travers de l'élément formant manchon (132) dudit dispositif de montage (20) ou est formé par celui-ci.

14. Installation selon la revendication 13, dans laquelle ladite bride (141) vient se mettre en butée contre un côté d'une partie de la structure de support (151), un dispositif de retenue (137) venant se mettre en butée contre un côté opposé de ladite partie de la structure de support à des fins de montage dudit élément (132) dessus.
